# DEMANDE DE BREVET EUROPEEN

(11) **EP 0 816 039 A1**
(43) Date de publication de la demande: **07.01.1998**
(21) Numéro de dépôt: 97401511.7
(22) Date de dépôt: 27.06.1997
(51) Int. Cl.: B29C 33/38, B29C 71/04

(54) **Procédé de fabrication d'une matrice de pressage notamment de disques optiques et matrice ainsi obtenue**

(30) Priorité: 01.07.1996 FR 9608175
(71) Demandeur: DIGIPRESS, F-14000 Caen (FR)
(72) Inventeur: Andre, Pascal, 14780 Lion Sur Mer (FR); Ledieu, Jean, 78121 Crespieres (FR)
(74) Mandataire: Weinstein, Zinovi

(57) **Abrégé**

La présente invention concerne un procédé de fabrication d'une matrice de pressage, notamment de disques optiques ainsi que la matrice de pressage ainsi obtenue.

Le procédé de fabrication d'une matrice de pressage de l'invention est caractérisé en ce qu'il comprend les étapes de : dépôt sur un substrat d'une couche de résine photosensible ; enregistrement, des informations à dupliquer, sous forme d'image latente, dans la couche de résine photosensible ; élimination des zones de résine insolée de la couche de résine photosensible ; croissance de microbosses dans les zones où la résine photosensible a été éliminée ; et élimination de la résine résiduelle.

L'invention permet d'obtenir des matrices de pressage utilisables pour le pressage notamment de disques optiques.

## Description

L'invention concerne un procédé de fabrication d'une matrice de pressage. Elle vise également la matrice de pressage obtenue par ce procédé.

Le procédé actuellement utilisé pour fabriquer des matrices de pressage, notamment de disques optiques, consiste à d'abord fabriquer un disque maître constitué d'un substrat qui porte à sa surface une succession de microcuvettes représentative, en positif de l'information à dupliquer et à lire dans les disques optiques obtenus en final.

A partir de ce disque maître, on fabrique une matrice de pressage généralement en nickel comportant à sa surface une succession de microbosses qui sont la réplique en négatif des microcuvettes du disque maître et donc représentant en négatif l'information à dupliquer.

Ce procédé comporte de nombreuses étapes qui allongent le temps de fabrication d'une matrice de pressage et également augmente le coût de fabrication de ces matrices de pressage.

L'invention vise à pallier ces inconvénients en proposant un procédé de fabrication d'une matrice de pressage, notamment de disques optiques, permettant de s'affranchir de l'étape intermédiaire de fabrication d'un disque maître.

A cet effet l'invention fournit un procédé de fabrication d'une matrice de pressage, notamment de disques optiques caractérisé en ce qu'il comprend les étapes de : dépôt sur un substrat d'une couche de résine photosensible ; enregistrement des informations à dupliquer, sous forme d'image latente, dans la couche de résine photosensible ; élimination des zones insolées de la couche de résine photosensible ; croissance de microbosses dans les zones où la résine photosensible a été éliminée ; et élimination des zones résiduelles de résine photosensible.

De préférence, le matériau constituant le substrat de la matrice de pressage selon le procédé de fabrication de l'invention est choisi dans le groupe constitué par le nickel, le chrome, les alliages à base de nickel, à base de chrome, les nitrures de titane, le tantale, le molybdène et leurs alliages.

De préférence, les microbosses sont constituées du même matériau que le substrat 8.

Les microbosses peuvent être obtenues par un dépôt électrolytique, par un dépôt chimique ou par une succession d'un dépôt électrolytique et d'un dépôt chimique.

La matrice de pressage obtenue par le procédé de fabrication de l'invention est également un objet de l'invention.

L'invention sera mieux comprise à la lecture de la description détaillée qui suit qui est faite en référence aux dessins d'accompagnement dans lesquels :

La figure 1 représente schématiquement les différentes étapes du procédé de fabrication d'une matrice de pressage de l'art antérieur.

La figure 2 représente schématiquement les différentes étapes de fabrication du procédé de fabrication d'une matrice de pressage de l'invention.

Le procédé de fabrication d'une matrice de pressage, notamment de disques optiques de l'invention permet d'obtenir une matrice de pressage sans fabriquer d'abord de disque maître.

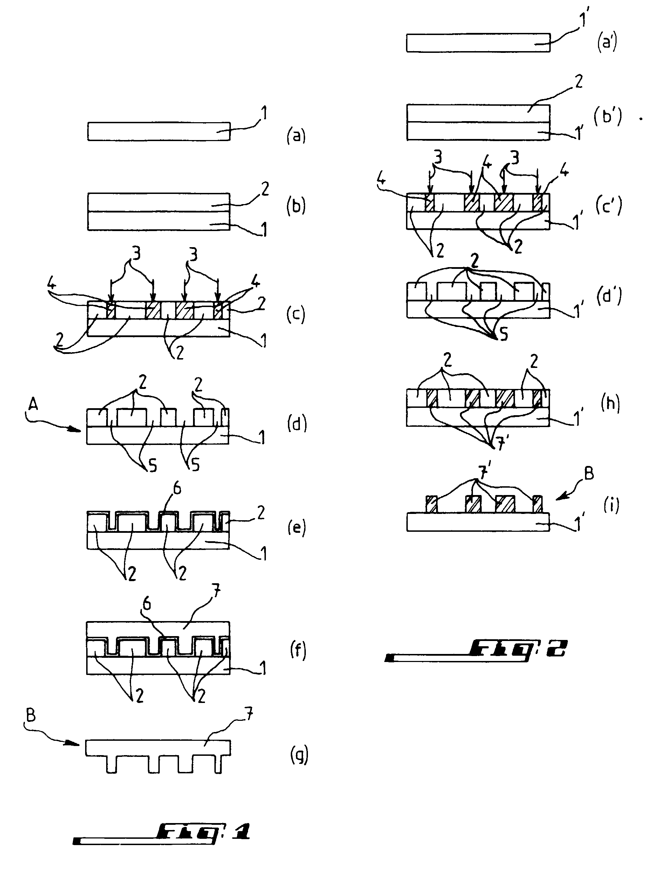

Le procédé de fabrication d'une matrice de pressage de l'art antérieur sera maintenant expliqué en référence à la figure 1.

Tout d'abord, dans le procédé de l'art antérieur, un disque maître, noté A dans la figure 1, est préparé de la façon suivante :

à l'étape notée (a) dans la figure 1, un substrat 1, généralement en verre, est préparé, de façon à obtenir l'état de surface souhaité.

Ensuite, comme illustré à l'étape notée (b), ce substrat 1 en verre est revêtu d'une couche de résine photosensible, généralement de type positif.

Les informations à dupliquer et à lire dans le disque optique obtenu en final, sont ensuite enregistrées, sous forme d'image latente, dans la couche de résine photosensible 2. Cet enregistrement, illustré à l'étape notée (c) de la figure 1, est généralement effectué par défilement d'un faisceau laser, noté 3 dans la figure 1, modulé en fonction des informations à enregistrer. On obtient alors des zones, notées 4 dans la figure 1, de résine insolée dans la couche de résine photosensible 2.

Le disque maître A est alors obtenu par élimination des zones 4 de résine photosensible insolée.

Ce disque maître A, illustré à l'étape notée (d) de la figure 1, est constitué d'un substrat en verre comportant à sa surface une succession de microreliefs 2 de résine photosensible non insolée et d'une succession de microcuvettes notées 5 dans la figure 1. La succession de microcuvettes est représentative en positif de l'information à dupliquer.

Pour obtenir la matrice de pressage voulue, comme illustré à l'étape notée (c) de la figure 1, le disque maître A est alors revêtu, sur sa surface comportant la succession de microcuvettes 5 et de microbosses 2, d'une couche 6 métallique, généralement en argent.

Ensuite, comme illustré à l'étape notée (f) dans la figure 1, on réalise sur la couche 6, un dépôt d'un matériau 7, généralement du nickel. Ce dépôt commence par remplir les microcuvettes 5 revêtues de la couche 6 puis fournit l'épaisseur souhaitée de la matrice. Cette épaisseur est à l'heure actuelle est d'environ 300 microns.

On obtient alors la matrice notée B, à l'étape notée (g) de la figure 1, par séparation de la matrice constituée du matériau 7 du disque maître A.

Cette matrice B est constituée du matériau 7 et comporte sur une de ses faces une succession de microbosses 7 représentatives en négatif des microcuvettes 5 et donc également en négatif de l'information à dupliquer.

En contraste à ce procédé et comme illustré dans la figure 2, le procédé de l'invention n'implique pas les étapes de fabrication d'un disque maître.

En effet, dans le procédé de l'invention, on part d'un substrat, noté 1' dans la figure 2, constitué du matériau approprié pour la fabrication d'une matrice de pressage.

Actuellement, les matrices de pressage sont constituées de nickel, de chrome, et d'alliages à base de nickel, à base de chrome, tels qu'un alliage nickel-chrome, nickel-cobalt. Elles pourraient être constituées également de nitrures de titane, de tantale, de molybdène et de leurs alliages, ou de tout autre matériau approprié.

Ce substrat 1' est, comme illustré à l'étape (a') de la figure 2, amené à l'état de surface voulu. Cette étape (a') correspond à l'étape (a) de la figure 1.

Ensuite, comme illustré à l'étape notée (b') dans la figure 2, une couche de résine photosensible 2 est déposée sur le substrat 1'. Cette étape correspond à l'étape notée (b) dans la figure 1.

A l'étape notée (c') dans la figure 2, qui correspond à l'étape notée (c) dans la figure 1, les informations à dupliquer et donc à lire ultérieurement dans le disque optique, sont enregistrées dans la couche de résine photosensible 2 généralement par défilement d'un faisceau laser 3 modulé en fonction des informations à enregistrer. Comme dans le cas du procédé de l'art antérieur, les informations sont enregistrées sous forme d'image latente. On obtient des zones de résine insolées, notées 4 dans la figure 2.

A l'étape notée (d'), dans la figure 2, qui correspond à l'étape notée (d) dans la figure 1, les zones 3 de résine insolées sont éliminées, ce qui mène à la création d'une succession de microcuvettes 5 représentatives en négatif de l'information à dupliquer.

Ici, contrairement au procédé de l'art antérieur et comme illustré à l'étape notée (h) dans la figure 2, on dépose dans les microcuvettes 5 un matériau 7', afin de remplir ces microcuvettes 5. On a alors créé des microbosses en matériau 7' représentatives, en négatif, de l'information à dupliquer.

Bien entendu, la hauteur de ces microbosses sera choisie pour être appropriée pour le pressage des disques optiques.

Le matériau 7' est un matériau approprié pour la fabrication d'une matrice de pressage. Il peut être identique au matériau du substrat 1' lui-même ou différent selon les propriétés recherchées. Mais si le matériau constituant le matériau 7' est différent du matériau constituant le susbtrat 1', comme le sait l'homme de l'art, il devra être choisi de façon à fournir un bon accrochage avec le matériau du substrat 1' et éviter de produire des effets électrolytiques avec le matériau du substrat 1'. On préfère donc que la matériau 7' soit identique au matériau constituant le substrat 1'.

Ensuite, les zones de résine résiduelle de la couche de résine photosensible 2 sont éliminées. Cette élimination peut être effectuée par voie chimique, arrachage, ou en utilisant un plasma ou toute autre méthode bien connue de l'homme de l'art.

On obtient alors une matrice de pressage, notée B dans la figure 2 et illustrée à l'étape (i) de cette figure 2. Cette matrice de pressage est constituée du substrat 1' comportant à sa surface une succession de microbosses 7' correspondant en négatif à l'information à dupliquer.

Comme on peut le voir de ce qui précède, ce procédé est avantageux en ce que :

il ne nécessite pas d'étape de fabrication d'un disque maître et d'étape de revêtement d'une couche d'argent de ce disque maître,

il ne nécessite pas non plus d'étape de croissance de l'épaisseur d'une matrice, qui était nécessaire dans le procédé de l'art antérieur, ce qui permet encore de raccourcir la durée du procédé.

La création des microbosses peut être obtenue par tout moyen approprié connu de l'homme de l'art. Elle peut être obtenue par une croissance par dépôt électrolytique du matériau 7', par croissance par dépôt chimique du matériau 7' ou par une succession de ces deux méthodes de dépôt.

Afin de mieux faire comprendre l'invention, un exemple de réalisation d'une matrice de pressage selon le procédé de l'invention sera maintenant décrit à titre purement illustratif et non limitatif.

### Exemple

Un substrat en nickel de 300 microns d'épaisseur est revêtu d'une couche de résine photosensible de type positif. Cette couche a une épaisseur de 150 nm.

Les informations sont enregistrées dans cette couche de résine photosensible par défilement d'un faisceau laser modulé en fonction de l'information à enregistrer.

Puis, on réalise un dépôt électrolytique de nickel dans les zones où la résine photosensible a été éliminée. Ce dépôt forme des microbosses d'une hauteur de 150 nm, cette hauteur étant celle actuellement nécessaire, pour certains presseurs de disques optiques.

Les zones de résine résiduelles sont alors éliminées par attaque chimique.

La matrice de pressage constituée du substrat en nickel portant à sa surface des microbosses en nickel représentatives en négatif de l'information à dupliquer est alors obtenue et peut être utilisée pour le pressage de nombreux disques optiques.

Bien entendu l'invention n'est nullement limitée au mode de réalisation décrit et illustré qui n'a été donné qu'à titre d'exemple.

Ainsi, la hauteur des microbosses pourra être modulée en fonction des évolutions de la technique. Cette modulation de la hauteur des microbosses est indépendante de la couche de résine sensible. En effet, l'épaisseur de la couche de résine sensible est choisie en fonction de la largeur et de la longueur des microbosses à obtenir et non de leur hauteur.

C'est dire que l'invention comprend tous les équivalents techniques des moyens décrits ainsi que leurs combinaisons si celles-ci sont effectuées suivant son esprit.

## Revendications

1. Procédé de fabrication d'une matrice de pressage, notamment de disques optiques caractérisé en ce qu'il comprend les étapes de :
- dépôt sur un substrat (1') d'une couche de résine photosensible (2),
- enregistrement, des informations à dupliquer, sous forme d'image latente, dans la couche de résine photosensible (2), par insolation de certaines zones de ladite couche,
- élimination des zones insolées (3) de la couche de résine photosensible (2),
- croissance de microbosses (7') uniquement dans les zones (3) où la résine photosensible (2) a été éliminée, et
- élimination des zones résiduelles de résine photosensible (2).

2. Procédé selon la revendication 1, caractérisé en ce que le substrat (1') est en un matériau choisi dans le groupe constitué par le nickel, le chrome, les alliages à base de nickel, les alliages à base de chrome et le nitrure de titane, le tantale, le molybdène et leurs alliages.

3. Procédé selon la revendication 1 ou 2, caractérisé en ce que les microbosses (7') sont constituées du même matériau que le substrat (1').

4. Procédé selon l'une quelconque des revendications 1 à 3, caractérisé en ce que les microbosses (7') sont obtenues par un dépôt électrolytique.

5. Procédé selon l'une quelconque des revendications 1 à 3, caractérisé en ce que les microbosses (7') sont obtenues par un dépôt chimique.

6. Procédé selon l'une quelconque des revendications 1 à 3, caractérisé en ce que les microbosses (7') sont obtenues par une succession d'un dépôt électrolytique et d'un dépôt chimique.

7. Matrice de pressage obtenue par le procédé selon l'une quelconque des revendications précédentes.
